# FASCICULE DE BREVET EUROPEEN

(11) **EP 1 760 356 B1**
(45) Date de publication et mention de la délivrance du brevet: **18.07.2012**
(21) Numéro de dépôt: 06118312.5
(22) Date de dépôt: 02.08.2006
(51) Int. Cl.: F16F 15/123, F16F 15/129

(54) **Embrayage à friction, en particulier pour véhicule automobile, comportant des moyens de frottement différenciés et module pré-assemblé pour cet embrayage à friction**
Reibungskupplung, insbesondere für Kraftfahrzeuge, mit unterschiedlichen Reibungsmitteln und vormontierte Einzelbaugruppe für diese Reibungskupplung
Friction clutch, in particular for motor vehicle, comprising differentiated friction means and pre-assembled module for this friction clutch

(30) Priorité: 31.08.2005 FR 0552639
(43) Date de publication de la demande: 07.03.2007
(73) Titulaire: Valeo Embrayages, 80009 Amiens (FR)
(72) Inventeur: Minereau, Hugues c/o VALEO EMBRAYAGES, 93240 Stains (FR); Fafet, Olivier c/o VALEO EMBRAYAGES, 80000 Amiens (FR); Graton, Michel c/o VALEO EMBRAYAGES, 75020 Paris (FR)
(74) Mandataire: Jeuland, Mickaël

(56) Documents cités:
- DE-A1- 10 018 655
- DE-A1- 19 526 053
- FR-A- 2 804 190
- US-A- 4 669 594
- US-A- 5 000 304
- US-B1- 6 257 089

## Description

La présente invention concerne un embrayage à friction, en particulier pour véhicule automobile, comportant des moyens de frottement différenciés, et un module pré-assemblé pour cet embrayage à friction.

Dans un véhicule automobile, un embrayage à friction a pour fonction de transmettre un couple entre un élément rotatif d'entrée et un élément rotatif de sortie, par pincement de la friction entre un plateau de pression et un volant moteur.

En général, l'élément d'entrée est formé par un disque de friction et l'élément de sortie est formé par un moyeu destiné notamment à être couplé à un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement.

On connaît déjà dans l'état de la technique, notamment d'après FR-A-2 804 190 (FR-00 00950), un embrayage à friction, en particulier pour véhicule automobile, du type comprenant au moins un amortisseur comportant :
- des première et seconde rondelles de guidage solidaires en rotation entre elles,
- un voile annulaire coaxial aux rondelles de guidage et mobile en rotation par rapport aux rondelles de guidage,
- des moyens d'amortissement à activation conditionnelle comportant :
   o un groupe d'organes élastiques à activation conditionnelle transmettant un couple entre les rondelles de guidage et le voile annulaire lorsque, ici, le débattement angulaire entre ces rondelles de guidage et ce voile est supérieur à un angle seuil prédéterminé, et
   o des moyens de frottement à activation conditionnelle, agencés entre la première rondelle de guidage et le voile, destinés à dissiper l'énergie accumulée dans les organes élastiques à activation conditionnelle, comprenant un organe de frottement comportant une rondelle de frottement munie d'au moins une patte d'activation de cette rondelle de frottement liée angulairement avec un organe élastique correspondant, la patte d'activation étant venue de matière avec la rondelle de frottement.
- la patte d'activation étant délimitée par des surfaces de contact avec l'organe élastique à activation conditionnelle correspondant et le voile formées par la tranche de la rondelle de frottement.

La patte d'activation est liée à une extrémité de l'organe élastique de manière à se déplacer conjointement avec cette extrémité et le voile lorsque l'organe élastique transmet le couple. La rondelle de frottement est ainsi entraînée en rotation avec le voile, ce qui active les moyens de frottement.

Habituellement, la rondelle de frottement est en plastique ou en métal. Les formes de la patte d'activation proposées dans l'état de la technique conduisent dans certains cas à une usure de cette patte d'activation qui n'est plus compatible avec les nouvelles exigences de durée de vie d'un embrayage, en particulier si la rondelle de frottement est en plastique.

D'autre part, une telle rondelle de frottement, dans cette configuration connue, ne permet pas un frottement suffisant pour filtrer les acyclismes de plus en plus important des moteurs à explosion.

L'invention a notamment pour but de fournir une rondelle de frottement pour des moyens de frottement à activation conditionnelle présentant une efficacité et une fiabilité améliorées.

A cet effet, l'invention a pour objet un embrayage à friction du type précité, dont la rondelle de frottement est fabriquée dans une tôle métallique, l'organe de frottement comprenant une rondelle en plastique, solidarisée en rotation avec la rondelle en tôle qui est intercalée axialement entre la première rondelle de guidage et la rondelle en plastique, les rondelles de frottement en tôle et en plastique présentant chacune une surface de frottement.

La patte d'activation munie de surfaces de contact formées par la tranche de la rondelle en tôle est particulièrement résistante.

De plus, la forme de cette patte est simple, si bien qu'il est possible de réaliser facilement la rondelle de frottement en matériau métallique résistant mieux à l'usure que le plastique.

Enfin, on a constaté que les surfaces de contact formées par la tranche de la rondelle en tôle ne provoquent pas d'incrustation gênante dans l'organe élastique ou le voile.

D'autre part, la rondelle en plastique permet de réaliser une autre zone de frottement avec une pièce métallique.

Ainsi, cela améliore l'efficacité des moyens frottement à activation conditionnelle ainsi que leur fiabilité.

Suivant d'autres caractéristiques particulières à un mode de réalisation et à ses variantes de cet embrayage à friction :
- la patte d'activation est repliée axialement de façon à enjamber ou traverser la première rondelle de guidage ;
- la surface de contact avec l'organe élastique de la patte d'activation comprend des moyens d'encliquetage destinés à coopérer avec un organe élastique à activation conditionnelle correspondant afin d'accrocher l'organe de frottement sur l'amortisseur ;
- les moyens d'encliquetage comprennent un ergot, venu de matière avec la patte d'activation, destiné à coopérer avec une extrémité de l'organe élastique à activation conditionnelle correspondant ;
- l'ergot est disposé à une extrémité libre de la patte d'activation ;
- l'ergot est disposé entre une extrémité de liaison de la patte d'activation avec la rondelle en tôle et une extrémité libre de cette patte d'activation ;
- l'embrayage comporte deux organes élastiques à activation conditionnelle, la rondelle en tôle comportant deux paires de pattes d'activation, les pattes d'activation d'une même paire étant en prise avec une paire d'extrémités d'un organe élastique à activation conditionnelle correspondant ;
- les moyens de frottement à activation conditionnelle comprennent deux premières surfaces de frottement complémentaires radiales portées respectivement par la première rondelle de guidage et l'organe de frottement ;
- les deux premières surfaces de frottement complémentaires radiales sont portées respectivement par la première rondelle de guidage et la rondelle en tôle ;
- les moyens de frottement à activation conditionnelle comprennent deux secondes surfaces de frottement complémentaires radiales portées respectivement par une rondelle élastique de compression axiale et l'organe de frottement ;
- les deux secondes surfaces de frottement complémentaires radiales sont portées respectivement par la rondelle élastique et la rondelle en plastique ;
- l'organe de frottement est intercalé axialement entre la première rondelle de guidage et la rondelle élastique ;
- l'amortisseur forme un pré-amortisseur, l'embrayage comportant de plus un amortisseur principal couplé en série avec le pré-amortisseur;
- l'amortisseur principal comprend des première et seconde rondelles principales de guidage solidaires en rotation entre elles, et un voile annulaire solidaire en rotation avec les rondelles de guidage du pré-amortisseur, coaxial aux rondelles principales de guidage et mobile en rotation par rapport à ces rondelles principales de guidage, la rondelle élastique étant intercalée axialement entre l'organe de frottement et la première rondelle de guidage de l'amortisseur principal ;
- moyens d'amortissement à activation conditionnelle sont agencés de sorte à être activés lorsque le débattement angulaire entre la rondelle de guidage et le voile est supérieur à un angle seuil prédéterminé ;
- moyens d'amortissement à activation conditionnelle sont agencés de sorte à être activés lorsque le débattement angulaire s'(effectue selon un sens de rotation prédéterminé.

L'invention a également pour objet un module pré-assemblé destiné à être monté dans un embrayage à friction tel que défini précédemment, comportant les rondelles de guidage, le voile annulaire et au moins un organe élastique à activation conditionnelle du pré-amortisseur, la rondelle de frottement étant encliquetée sur chaque organe élastique à activation conditionnelle du pré-amortisseur.

De préférence, le module pré-assemblé comporte le voile de l'amortisseur principal sur lequel sont fixées les rondelles de guidage du pré-amortisseur.

L'invention sera mieux comprise à la lecture de la description qui va suivre, donnée uniquement à titre d'exemple et faite en se référant aux dessins annexés dans lesquels :
- la figure 1 est une demi-vue en coupe axiale d'un embrayage à friction selon l'invention ;
- la figure 2 est une vue en perspective éclatée de l'embrayage de la figure 1 ;
- la figure 3 est une vue en perspective d'éléments de l'embrayage à friction représenté sur les figures précédentes ;
- la figure 4 est une vue en perspective et en coupe de la rondelle en tôle des moyens d'amortissement à activation conditionnelle d'un pré-amortisseur de l'embrayage à friction représenté sur les figures précédentes ;
- la figure 5 est une vue de détail de la partie cerclée 5 de la figure 4, montrant une patte d'activation de la rondelle en tôle ;
- les figures 6 et 7 sont des vues de différentes variantes de la patte d'activation représentée sur la figure 5.

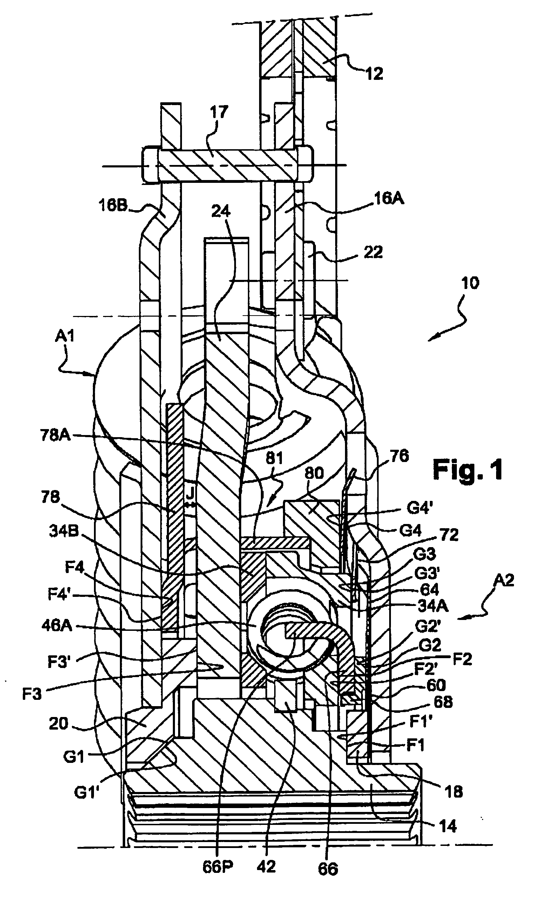

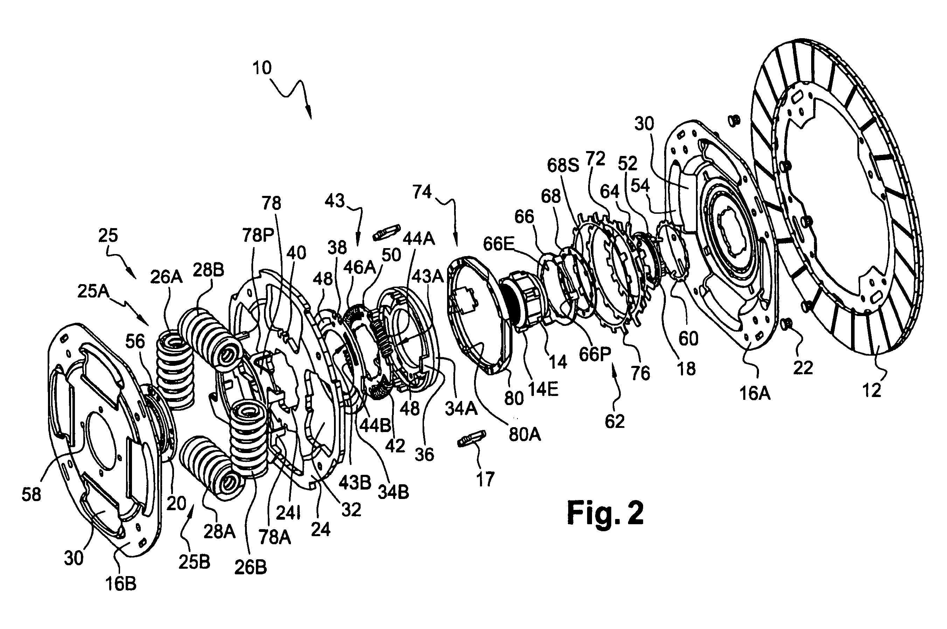

On a représenté sur les figures 1 et 2 un embrayage à friction selon un exemple de mode de réalisation de l'invention. Dans l'exemple décrit, l'embrayage est destiné à équiper un véhicule automobile.

L'embrayage à friction comprend un dispositif à friction 10, destiné à transmettre un couple entre un volant moteur solidaire en rotation d'un arbre menant, tel que le vilebrequin d'un moteur à combustion interne, et un arbre mené tel que l'arbre d'entrée d'une boîte de vitesses.

Le dispositif à friction 10 est muni de moyens d'amortissement comportant un amortisseur principal A1 et un pré-amortisseur A2. Ces amortisseurs A1, A2 sont couplés en série entre un élément rotatif d'entrée générale, tel qu'un disque de friction 12, et un élément rotatif de sortie générale, tel qu'un moyeu interne 14, de forme générale annulaire, ces éléments d'entrée et de sortie étant sensiblement coaxiaux.

De façon connue, le disque de friction 12 est destiné à être serré entre le volant moteur et un plateau de pression actionné par des moyens embrayeurs. Le moyeu interne 14 comprend des cannelures longitudinales internes permettant de le solidariser en rotation avec une extrémité de l'arbre mené.

Chaque amortisseur A1, A2 est muni d'éléments rotatifs d'entrée et de sortie, un couple entrant par l'élément d'entrée étant transmis à l'élément de sortie après amortissement.

L'élément d'entrée de l'amortisseur principal A1 est l'élément d'entrée générale du dispositif à friction 10, c'est à dire le disque de friction 12.

L'amortisseur principal A1 comprend des première 16A et seconde 16B rondelles de guidage, solidarisées en rotation entre elles à l'aide de moyens classiques 17. Ces rondelles de guidage 16A, 16B sont montées en rotation sur le moyeu 14 au moyen de paliers annulaires 18, 20 respectivement. Le disque de friction 12 est fixé sur la première rondelle de guidage 16A au moyen de rivets 22.

Un voile annulaire 24 est intercalé axialement entre les deux rondelles de guidage 16A, 16B, co-axialement à celles-ci. Ce voile annulaire 24 comporte, en périphérie interne, une denture 241 qui engrène, avec un jeu circonférentiel prédéterminé, avec une denture correspondante 14E de la périphérie externe du moyeu 14. La denture interne 241 du voile 24 forme des saillies sensiblement radiales destinées à coopérer avec des évidements complémentaires externes du moyeu 14.

L'amortisseur principal A1 comporte également des moyens d'amortissement 25 destinés à amortir des vibrations en provenance du moteur. Ces moyens d'amortissement 25 comportent des moyens 25A d'amortissement à activation immédiate, activés dès que débute le débattement angulaire entre les rondelles de guidage 16A, 16B et le voile 24, et des moyens 25B d'amortissement à activation conditionnelle, activés, ici, lorsque le débattement angulaire entre les rondelles de guidage 16A, 16B et le voile annulaire 24 dépasse un angle seuil prédéterminé à partir d'une position de repos, dit angle seuil d'amortisseur principal A1.

Les moyens d'amortissement 25 comportent des organes élastiques à action circonférentielle, tels que des ressorts hélicoïdaux 26A, 26B, 28A, 28B de forte raideur, logés dans des fenêtres 30 des rondelles de guidage 16A, 16B et dans des fenêtres 32 du voile annulaire 24. Les organes élastiques 26A, 26B, 28A, 28B sont répartis en deux groupes.

Les moyens d'amortissement à activation immédiate 25A comportent des organes élastiques 26A, 26B d'un premier groupe, dits organes élastiques à activation immédiate, logés sans jeu circonférentiel dans les fenêtres 30 des rondelles de guidage 16A, 16B et dans les fenêtres 32 du voile annulaire 24. Ils participent à la transmission d'un couple de rotation entre les rondelles de guidage 16A, 16B et le voile 24 dès le début d'une rotation relative entre le disque de friction 12 et le moyeu 14.

Les moyens d'amortissement à activation conditionnelle 25B comportent des organes élastiques 28A, 28B d'un second groupe, dits organes élastiques à activation conditionnelle, logés sans jeu circonférentiel dans les fenêtres 30 des rondelles de guidage 16A, 16B et avec un jeu circonférentiel prédéterminé dans les fenêtres 32 du voile annulaire 24. Les organes élastiques 28A, 28B du second groupe sont ici activés de façon décalée pour assurer la transmission d'un couple de rotation que lorsque le débattement angulaire entre les rondelles de guidage 16A, 16B et le voile annulaire 24 dépasse l'angle seuil d'amortisseur principal A1. On notera que cet angle seuil d'amortisseur principal A1 correspond au jeu circonférentiel entre les organes élastiques 28A, 28B et les fenêtres 32 du voile 24.

Ainsi les organes élastiques 26A, 26B du premier groupe sont activés de façon immédiate pour transmettre le couple en permanence, et les organes élastiques 28A, 28B du second groupe sont activés de façon conditionnelle pour transmettre le couple uniquement lorsque le débattement angulaire entre les rondelles de guidage 16A, 16B et le voile annulaire 24 est, ici, supérieure à l'angle seuil d'amortisseur principal A1.

Le pré-amortisseur A2 relie le voile annulaire 24 de l'amortisseur principal A1 et le moyeu 14.

Le pré-amortisseur A2 comprend des première 34A et seconde 34B rondelles de guidage. Ces rondelles de guidage 34A, 34B sont solidarisées en rotation avec le voile 24 et accrochées sur ce voile 24 à l'aide de pattes axiales 36 ménagées à la périphérie de la première rondelle de guidage 34A.

En effet, les pattes 36 sont emboîtées dans des encoches complémentaires 38, 40 de solidarisation en rotation ménagées respectivement sur les contours de la seconde rondelle de guidage 34B et des fenêtres 32 du voile 24. Par ailleurs, les extrémités libres des pattes 36 coopèrent par encliquetage avec les contours des fenêtres 32 pour solidariser axialement les première 34A et seconde 34B rondelles de guidage au voile 24.

Dans le mode de réalisation représenté, les rondelles de guidage 34A, 34B sont en matière plastique, éventuellement renforcée de fibres.

Un voile annulaire 42 de pré-amortisseur est intercalé axialement entre les deux rondelles de guidage 34A, 34B, co-axialement à celles-ci. Ce voile annulaire 42 est solidaire en rotation du moyeu 14, par exemple par engrènement avec la denture périphérique externe 14E de ce moyeu.

On notera que les pattes 36 enjambent le voile 42 sans gêner le mouvement relatif entre les rondelles de guidage 34A, 34B et le voile 42.

Le pré-amortisseur A2 comporte également des moyens d'amortissement 43 destinés à amortir des vibrations en provenance du moteur. Ces moyens d'amortissement 43 de pré-amortisseur A2 comportent des moyens 43A d'amortissement à activation immédiate, activés dès que débute le débattement angulaire entre les rondelles de guidage 34A, 34B et le voile 42 du pré-amortisseur A2, et des moyens 43B d'amortissement à activation conditionnelle, activés, ici, lorsque le débattement angulaire entre les rondelles de guidage 34A, 34B et le voile annulaire 42 du pré-amortisseur A2 dépasse un angle seuil prédéterminé à partir d'une position de repos, dit angle seuil de pré-amortisseur A2.

Les moyens d'amortissement 43 comportent des organes élastiques à action circonférentielle, tels que des ressorts hélicoïdaux 44A, 44B, 46A, 46B de raideur relativement faible, logés dans des fenêtres 48 des rondelles de guidage 34A, 34B et dans des fenêtres 50 du voile annulaire 42. De façon analogue à l'amortisseur principal A1, les organes élastiques 44A, 44B, 46A, 46B sont répartis en deux groupes.

Les moyens d'amortissement à activation immédiate 43A comportent des organes élastiques 44A, 44B d'un premier groupe, dits organes élastiques à activation immédiate, logés sans jeu circonférentiel dans les fenêtres 48, 50. Ils participent à la transmission d'un couple de rotation entre les rondelles de guidage 34A, 34B et le voile 42 dès le début d'une rotation relative entre ces rondelles de guidage 34A, 34B et ce voile 42.

Les moyens d'amortissement à activation conditionnelle 43B comportent des organes élastiques 46A, 46B d'un second groupe, dits organes élastiques à activation conditionnelle, logés sans jeu circonférentiel dans les fenêtres 48 des rondelles de guidage 34A, 34B et avec un jeu circonférentiel prédéterminé dans les fenêtres 50 du voile annulaire 42. Les organes élastiques 46A, 46B du second groupe sont activés de façon conditionnelle pour assurer la transmission d'un couple de rotation que lorsque le débattement angulaire entre les rondelles de guidage 16A, 16B et le voile annulaire 24 dépasse l'angle seuil de pré-amortisseur A2. On notera que cet angle seuil de pré-amortisseur A2 correspond au jeu circonférentiel entre les organes élastiques 46A, 46B et les fenêtres 50 du voile 42.

Ainsi les organes élastiques 44A, 44B du premier groupe sont activés de façon immédiate pour transmettre le couple en permanence, et les organes élastiques 46A, 46B du second groupe sont activés de façon décalée pour transmettre le couple uniquement lorsque le débattement angulaire entre les rondelles de guidage 34A, 34B et le voile annulaire 42 est supérieure à l'angle seuil de pré-amortisseur A2.

L'ensemble des organes élastiques 26A, 26B, 28A, 28B, 44A, 44B, 46A, 46B permet donc d'obtenir quatre étages d'amortissement des vibrations et des irrégularités de couple. En effet, les organes élastiques 44A, 44B, 46A, 46B du pré-amortisseur A2 déterminent des premier et deuxième étages d'amortissement selon qu'ils sont montés sans ou avec jeu circonférentiel dans leurs fenêtres correspondantes. Par ailleurs, en fin de course du pré-amortisseur A2, les organes élastiques 26A, 26B, 28A, 28B de l'amortisseur principal A1 déterminent des troisième et quatrième étages d'amortissement selon qu'ils sont montés sans ou avec jeu circonférentiel dans leurs fenêtres correspondantes.

A chaque étage d'amortissement sont associés des moyens de frottement destinés à dissiper l'énergie accumulée dans les organes élastiques. Ainsi, le pré-amortisseur A2 comprend des premiers et deuxièmes moyens de frottement, et l'amortisseur A1 principal comprend des troisièmes et quatrièmes moyens de frottement.

Les premiers moyens de frottement associés au pré-amortisseur A2 comprennent des surfaces de frottement portées par le moyeu 14 et les paliers 18, 20.

Le palier 18 est solidarisé en rotation avec la première rondelle de guidage 16A de l'amortisseur principal A1 à l'aide de moyens classiques, par exemple des doigts axiaux 52 coopérant par encliquetage avec un contour interne complémentaire 54 de la rondelle de guidage 16A.

Le palier 20, participant au centrage de la seconde rondelle de guidage 16B de l'amortisseur principal A1, est solidarisé en rotation avec cette rondelle de guidage 16B à l'aide de moyens classiques, par exemple des doigts axiaux 56 emboîtés dans des orifices complémentaires 58 de la rondelle de guidage 16B.

Deux surfaces de frottement complémentaires radiales F1, F1' sont portées respectivement par le palier 18 et un épaulement du moyeu 14.

Deux surfaces de frottement complémentaires tronconiques G1, G1' sont portées respectivement par le palier 20 et le moyeu 14.

Les surfaces de frottement complémentaires F1, F1', G1, G1' sont sollicitées élastiquement en contact mutuel par une rondelle élastique 60 de compression axiale en appui entre la première rondelle de guidage 16A de l'amortisseur principal A1 et le palier 18.

La rondelle élastique 60, de préférence en acier à ressort, est solidarisée en rotation avec la première rondelle de guidage 16A de l'amortisseur principal A1 à l'aide de moyens classiques, par exemple par coopération de pattes et encoches complémentaires.

Dans le mode de réalisation représenté, les paliers 18 et 20 sont en matière plastique, éventuellement renforcée de fibres, et exercent un frottement relativement doux sur le moyeu 14.

Les deuxièmes moyens de frottement associés au pré-amortisseur A2 sont activés de façon décalés par rapport aux premiers moyens de frottement.

Ces deuxièmes moyens de frottement comprennent des surfaces de frottement portées par un organe de frottement 62, la rondelle de guidage 34A du pré-amortisseur A2 et une rondelle élastique 64 de compression axiale, de préférence en acier à ressort.

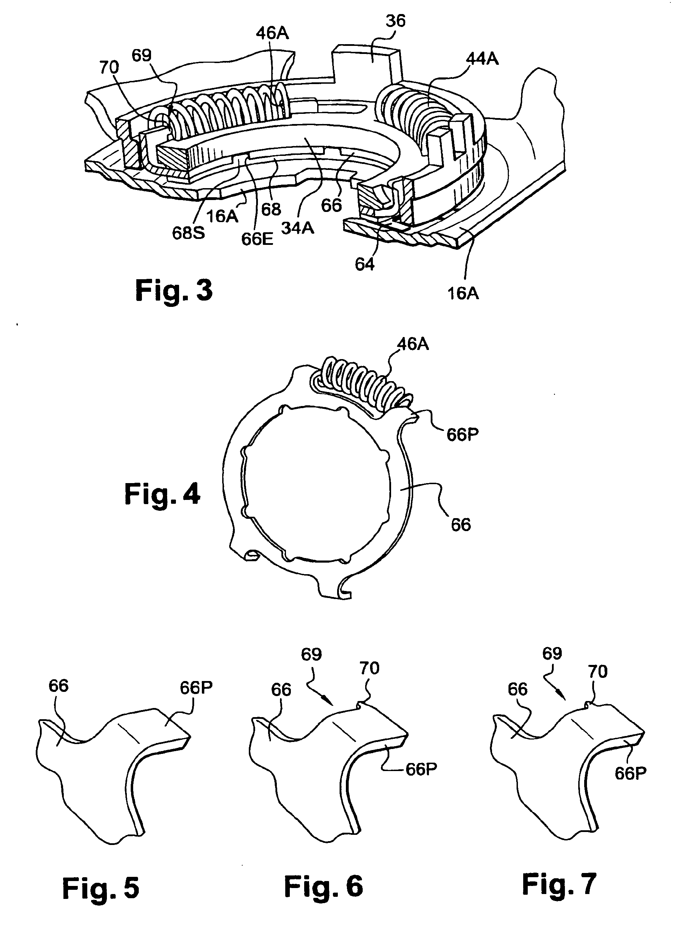

L'organe de frottement 62, représenté plus en détail sur la figure 3, comprend des première 66 et seconde 68 rondelles de frottement coaxiales, juxtaposées et fabriquées respectivement en tôle métallique et en matière plastique.

Ces rondelles de frottement 66, 68 sont solidarisées en rotation l'une avec l'autre à l'aide de moyens classiques comprenant par exemple des encoches 66E, ménagées sur un contour interne de la rondelle en tôle 66, dans lesquelles sont emboîtées des saillies axiales 68S, ménagées sur un contour interne de la rondelle en plastique 68.

L'organe de frottement 62 est intercalé axialement entre la rondelle de guidage 34A du pré-amortisseur A2 et la rondelle élastique 64 de compression axiale.

La rondelle en tôle 66 est munie également, à sa périphérie externe, de deux paires de pattes 66P d'activation de cette rondelle 66. Les pattes d'activation 66P d'une même paire étant en prise avec une paire d'extrémités d'un organe élastique 46A, 46B correspondant lorsque celui-ci est au repos.

Lorsque le deuxième étage d'amortissement associé au pré-amortisseur A2 est activé, le jeu circonférentiel entre chaque organe élastique 46A, 46B et le contour d'une fenêtre 50 correspondante du voile 42 est annulé, si bien que le voile 42 vient en appui contre une des extrémités de l'organe élastique 46A, 46B pour comprimer cet organe élastique 46A, 46B. Ainsi, la patte d'activation 66P, en contact avec l'extrémité de l'organe élastique 46A, 46B coopérant avec le voile 42, se déplace conjointement avec cette extrémité et le voile 42 pour entraîner en rotation la rondelle en tôle 66 (et donc la rondelle en plastique 68).

Deux surfaces de frottement complémentaires radiales F2, F2' sont portées respectivement par la première rondelle de guidage 34A et la rondelle en tôle 66 de façon à créer un frottement de type plastique/acier.

Deux surfaces de frottement complémentaires radiales G2, G2' sont portées respectivement par la rondelle élastique 64 et la rondelle en plastique 68 de façon à créer un frottement de type plastique/acier.

Les surfaces de frottement complémentaires F2, F2', G2, G2' sont sollicitées élastiquement en contact mutuel par la rondelle élastique 64. En effet, cette rondelle élastique 64 est montée en appui entre la première rondelle de guidage 16A de l'amortisseur principal A1 et l'organe de frottement 62, plus particulièrement la rondelle en plastique 68. La rondelle élastique 64 est solidarisée en rotation avec la rondelle de guidage 16A de l'amortisseur principal A1 à l'aide de moyens classiques, par exemple par coopération de pattes radiales et encoches complémentaires.

On a représenté plus en détail les pattes 66P sur les figures 3 à 5.

Chaque patte 66P est venue de matière avec la rondelle 66 en tôle et est délimitée par des surfaces de contact avec l'organe élastique 46A, 46B correspondant et le voile 42 formées par la tranche de cette rondelle 66 en tôle.

En outre, chaque patte 66P est repliée axialement de façon à traverser la première rondelle de guidage 34A du pré-amortisseur A2 (voir figure 3). En variante, les pattes 66P pourraient enjamber la première rondelle de guidage 34A du pré-amortisseur A2.

Deux variantes de réalisation d'une patte d'activation 66P sont représentées respectivement sur les figures 6 et 7.

Selon ces variantes, la surface de contact avec l'organe élastique 46A, 46B de chaque patte d'activation 66P comprend des moyens d'encliquetage 69 destinés à coopérer avec un organe élastique à activation conditionnelle 46A, 46B correspondant afin d'accrocher l'organe de frottement 62 sur l'amortisseur A2.

De préférence, les moyens d'encliquetage 69 comprennent un ergot 70, venu de matière avec la patte d'activation 66P, destiné à coopérer avec une extrémité de l'organe élastique à activation conditionnelle 46A, 46B correspondant.

Dans la variante de la figure 6, l'ergot 70 est disposé à une extrémité libre 66L de la patte 66P.

Dans la variante de la figure 7, l'ergot 70 est disposé entre une extrémité de liaison de cette patte 66P avec la rondelle en tôle 66 et une extrémité libre 66L de cette patte 66P.

Les troisièmes moyens de frottement associés à l'amortisseur principal A1 comprennent des surfaces de frottement portées par le palier 20, le voile 24 de l'amortisseur principal A1, la première rondelle de guidage 34A du pré-amortisseur A2 et une rondelle élastique 72 de compression axiale, de préférence en acier à ressort.

Deux surfaces de frottement complémentaires radiales F3, F3' sont portées respectivement par le palier 20 et le voile 24 de l'amortisseur principal A1. Comme déjà précisé ci-dessus, le palier 20 est solidaire en rotation de la rondelle de guidage 16B.

On notera que le palier 20 est un organe de frottement commun aux moyens de frottement à activation immédiate du pré-amortisseur (premier étage) et aux moyens de frottement à activation immédiate de l'amortisseur principal (troisième étage).

Deux surfaces de frottement complémentaires radiales G3, G3' sont portées respectivement par la rondelle de guidage 34A du pré-amortisseur A2 et la rondelle élastique 72.

Les surfaces de frottement complémentaires F3, F3', G3, G3' sont sollicitées élastiquement en contact mutuel par la rondelle élastique 72. En effet, cette rondelle élastique 72 est montée en appui entre la première rondelle de guidage 16A de l'amortisseur principal A1 et la première rondelle de guidage 34A du pré-amortisseur A2. La rondelle élastique 72 est solidarisée en rotation avec la rondelle de guidage 16A de l'amortisseur principal A1 à l'aide de moyens classiques, par exemple par coopération de pattes radiales et encoches complémentaires.

Les quatrièmes moyens de frottement de l'amortisseur principal A1 associés à l'amortisseur principal A1 sont activés de façon conditionnelle par rapport aux troisièmes moyens de frottement.

Ces quatrièmes moyens de frottement comprennent des surfaces de frottement portées par la seconde rondelle de guidage 16B de l'amortisseur principal A1, un organe de frottement 74 et une rondelle élastique 76 de compression axiale, de préférence en acier à ressort.

L'organe de frottement 74 comprend des première 78 et seconde 80 rondelles de frottement coaxiales, sensiblement planes, fabriquées respectivement en tôle métallique et en matière plastique.

La première rondelle de frottement 78 est intercalée axialement entre la seconde rondelle de guidage 16B et le voile annulaire 24 de l'amortisseur principal A1, et entoure le palier 20. La seconde rondelle de frottement 80 est intercalée axialement entre le voile annulaire 24 de l'amortisseur principal A1 et la rondelle élastique 76, et entoure la première rondelle de guidage 34A du pré-amortisseur A2.

On notera que des moyens d'entretoisement 81 sont agencés entre la première rondelle de frottement 78 et la seconde rondelle de frottement 80. Ces moyens d'entretoisement 81 ménagent un dégagement axial J entre deux faces en vis à vis de la première rondelle de frottement 78 et du voile 24 de l'amortisseur principal A1. Ainsi, la première rondelle de frottement 78 comporte une surface libre en regard du voile 24, qui n'est sujette à aucun frottement.

La première rondelle de frottement 78 ne subit alors des frottements qu'avec la rondelle de guidage 16B, et uniquement lorsque les moyens d'amortissement 25B à activation conditionnelle de l'amortisseur principal A1 sont activés.

De préférence, les moyens d'entretoisement 81 comportent des pattes axiales d'entretoisement 78A, venues de matière avec la première rondelle de frottement 78, et munies chacune d'une extrémité de liaison avec la première rondelle de frottement 78 et d'une extrémité libre de coopération avec la seconde rondelle de frottement 80.

Les rondelles de frottement 78, 80 sont solidarisées en rotation l'une avec l'autre à l'aide des pattes axiales d'entretoisement 78A. En effet, les extrémités libre de coopération ces pattes d'entretoisement 78A sont emboîtées dans des orifices complémentaires 80A, ménagés dans la seconde rondelle de frottement 80.

La première rondelle de frottement 78 comporte huit pattes d'entretoisement 78A disposées sur tout le contour de cette première rondelle de frottement 78 afin d'optimiser la solidarisation en rotation des rondelles de frottement 78, 80.

On notera que les pattes d'entretoisement 78A enjambent le voile 24 sans gêner le mouvement relatif entre les rondelles de guidage 16A, 16B et le voile 24.

La première rondelle de frottement 78 est munie également de deux paires de pattes 78P d'activation de cette rondelle 78, venues de matière avec la première rondelle de frottement 78. Les pattes d'activation 78P d'une paire sont liées angulairement avec les extrémités d'un organe élastique 28A, 28B correspondant lorsque celui-ci est au repos.

Chaque patte d'activation 78P est délimitée par une surface de contact avec l'organe élastique 28A, 28B correspondant. Plus particulièrement, chaque patte d'activation 78P comporte un siège pour l'organe élastique 28A, 28B correspondant délimité par la surface de contact.

Le siège et au moins l'une des pattes d'entretoisement 78A sont formés par un même bord tombé de la rondelle de frottement 78, délimité par une ligne de pliage continue.

Lorsque le quatrième étage d'amortissement associé à l'amortisseur principal A1 est activé, le jeu circonférentiel entre chaque organe élastique 28A, 28B et le contour d'une fenêtre 32 correspondante du voile 24 est annulé, si bien que le voile 24 vient en appui contre une des extrémités de l'organe élastique 28A, 28B pour comprimer cet organe élastique 28A, 28B. Ainsi, la patte d'activation 78P, en contact avec l'extrémité de l'organe élastique 28A, 28B coopérant avec le voile 24, se déplace conjointement avec cette extrémité et le voile 24 pour entraîner en rotation la première rondelle de frottement 78 (et donc la seconde rondelle de frottement 80).

Deux surfaces de frottement complémentaires radiales F4, F4' sont portées par la seconde rondelle de guidage 16B et la première rondelle de frottement 78.

Deux surfaces de frottement complémentaires radiales G4, G'4 sont portées par la seconde rondelle de frottement 80 et la rondelle élastique 76.

Les surfaces de frottement complémentaires F4, F4', G4, G4' sont sollicitées élastiquement en contact mutuel par la rondelle élastique 76. En effet, cette rondelle élastique 76 est montée en appui entre la première rondelle de guidage 16A de l'amortisseur principal A1 et l'organe de frottement 74, plus particulièrement la seconde rondelle de frottement 80. La rondelle élastique 76 est solidarisée en rotation avec la rondelle de guidage 16A de l'amortisseur principal A1 à l'aide de moyens classiques, par exemple par coopération de pattes radiales et encoches complémentaires.

On décrira ci-dessous les principaux aspects du fonctionnement de l'embrayage à friction 10 illustré sur les figures 1 et 2.

Lorsque le moteur du véhicule automobile fonctionne à un régime de ralenti, l'amortisseur principal A1 se comporte comme un organe rigide en raison de la raideur relativement élevée de ses organes élastiques 44A, 44B, 46A, 46B. Dans ce cas, le couple de rotation fourni par le vilebrequin du moteur est directement transmis du disque de friction 12 au voile annulaire 24 de l'amortisseur principal A1.

Les rondelles de guidage 34A, 34B étant solidaires en rotation du voile 24 de l'amortisseur principal A1, le couple de rotation est également transmis à ces rondelles de guidage 34A, 34B.

Le couple de rotation est alors transmis de ces rondelles de guidage 34A, 34B au voile annulaire 42 du pré-amortisseur A2, et donc au moyeu 14, par l'intermédiaire des organe élastiques 44A, 44B, 46A, 46B.

Les vibrations et irrégularités de couple sont amorties dans un premier temps par les organes élastiques à activation immédiate 44A, 44B du pré-amortisseur A2 et par les premiers moyens de frottement à activation immédiate (surfaces F1, F'1, G1, G'1) associés au pré-amortisseur A2.

Dans le cas ici illustré, lorsque le débattement angulaire entre les rondelles de guidage 34A, 34B et le voile annulaire 42 du pré-amortisseur A2 dépasse l'angle seuil de pré-amortisseur A2, les vibrations et irrégularités sont également amorties par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2.

Le voile annulaire 24 comporte, en périphérie interne, une denture 241 qui engrène, avec un jeu circonférentiel prédéterminé, avec une denture correspondante 14E de la périphérie externe du moyeu 14. La denture interne 241 du voile 24 forme des saillies sensiblement radiales destinées à coopérer avec des évidements complémentaires externes du moyeu 14.

Lorsque le débattement angulaire entre le voile 42 du pré-amortisseur A2 et les rondelles de guidage 34A, 34B est égal au jeu circonférentiel prédéterminé entre le voile 24 et le moyeu 14, ce voile 24 et ce moyeu 24 coopèrent entre eux par butée. Dans ce cas, le pré-amortisseur A2 n'intervient plus dans la transmission du couple, ce couple étant directement transmis du voile 24 de l'amortisseur principal A1 au moyeu 14.

Le couple est alors transmis du disque de friction 12 au moyeu 14 par l'intermédiaire de l'amortisseur principal A1 uniquement.

Les vibrations et irrégularités du couple sont amorties dans un premier temps par les organes élastiques 26A, 26B à activation immédiate de l'amortisseur principal A1 et par les troisièmes moyens de frottement à activation immédiate (surfaces F3, F3', G3 et G'3) associés à l'amortisseur principal A1.

Dans le cas ici illustré, lorsque le débattement angulaire entre les rondelles de guidage 16A, 16B et le voile annulaire 24 de l'amortisseur principal A1 dépasse l'angle seuil de l'amortisseur principal A1, les vibrations et irrégularités sont également amorties par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1.

On forme ainsi quatre étages d'amortissement, qui s'activent successivement en fonction du débattement angulaire entre le disque de friction 12 et le moyeu 14.

Dans une variante, non illustrée, de réalisation de l'invention qui vient d'être décrite, les vibrations et irrégularités sont également amortis par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2, lorsque le débattement angulaire entre les rondelles de guidage 34A, 34B et le voile annulaire 42 du pré-amortisseur A2 s'effectue selon un sens de rotation prédéterminé, par exemple en rétro.

Dans une autre variante, non illustrée, de réalisation de l'invention qui vient d'être décrite, les vibrations et irrégularités sont également amortis par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1, lorsque le débattement angulaire entre les rondelles de guidage 16A, 16B et le voile annulaire 24 de l'amortisseur principal A1 s'effectue selon un sens de rotation prédéterminé, par exemple en rétro.

On notera que l'invention ne se limite pas au mode de réalisation décrit ci-dessus. En particulier, on pourrait équiper, le cas échéant, l'amortisseur principal de moyens d'amortissement comportant une rondelle de frottement similaire à la rondelle de frottement 66.

Par ailleurs, on notera que la rondelle de frottement 66 de l'invention est particulièrement avantageuse puisque, en plus de remplir les fonctions décrites précédemment, cette rondelle de frottement 66 simplifie le montage du dispositif à friction 10.

En effet, lorsque les pattes 66P de la rondelle de frottement 66 sont encliquetées dans les organes élastiques 46A, 46B, cette rondelle de frottement 66 et le pré-amortisseur A2 forment un module pré-assemblé pouvant être monté en une seule opération sur le dispositif à friction 10.

De préférence, le module pré-assemblé comporte également le voile 24 de l'amortisseur principal A1, sur lequel sont fixées des rondelles de guidage 34A, 34B du pré-amortisseur A2.

Le module pré-assemblé comporte donc les rondelles de guidage (34A, 34B), le voile annulaire (42) et au moins un organe élastique (46A, 46B) à activation conditionnelle du pré-amortisseur (A2), la rondelle de frottement (66) étant encliquetée sur chaque organe élastique (46A, 46B) à activation conditionnelle du pré-amortisseur (A2).

## Revendications

1. Embrayage à friction, en particulier pour véhicule automobile, du type comprenant au moins un amortisseur (A2) comportant :
- des première (34A) et seconde (34B) rondelles de guidage solidaires en rotation entre elles,
- un voile annulaire (42) coaxial aux rondelles de guidage (34A, 34B) et mobile en rotation par rapport aux rondelles de guidage (34A, 34B),
- des moyens d'amortissement à activation conditionnelle comportant :
o un groupe d'organes élastiques à activation conditionnelle (46A, 46B) transmettant un couple entre les rondelles de guidage (34A, 34B) et le voile annulaire (42) selon le débattement angulaire entre ces rondelles de guidage (34A, 34B) et ce voile (42), et
o des moyens de frottement à activation conditionnelle, agencés entre la première rondelle de guidage (34A) et le voile (42), destinés à dissiper l'énergie accumulée dans les organes élastiques à activation conditionnelle (46A, 46B), comprenant un organe de frottement (62) comportant une rondelle de frottement (66) munie d'au moins une patte d'activation (66P) de cette rondelle de frottement (66) liée angulairement avec un organe élastique (46A, 46B) correspondant, la patte d'activation (66P) étant venue de matière avec la rondelle de frottement (66), la patte d'activation (66P) étant délimitée par des surfaces de contact avec l'organe élastique (46A, 46B) à activation conditionnelle correspondant et le voile (42), lesdites surface étant formées par la tranche de la rondelle de frottement (66)
**caractérisé en ce que** la rondelle de frottement (66) est fabriquée dans une tôle métallique, l'organe de frottement comprenant une rondelle en plastique (68), solidarisée en rotation avec la rondelle en tôle qui est intercalée axialement entre la première rondelle de guidage et la rondelle en plastique, les rondelles de frottement en tôle (66) et en plastique (68) présentant chacune une surface de frottement (F2', G2).

2. Embrayage selon la revendication 1, **caractérisé en ce que** la patte d'activation (66P) est repliée axialement de façon à enjamber ou traverser la première rondelle de guidage (34A).

3. Embrayage selon la revendication 1 ou 2, **caractérisé en ce que** la surface de contact avec l'organe élastique (46A, 46B) de la patte d'activation (66P) comprend des moyens d'encliquetage (69) destinés à coopérer avec un organe élastique à activation conditionnelle (46A, 46B) correspondant afin d'accrocher l'organe de frottement (62) sur l'amortisseur (A2).

4. Embrayage selon la revendication 1 à 3 **caractérisé en ce que** les moyens d'encliquetage (69) comprennent un ergot (70), venu de matière avec la patte d'activation (66P), destiné à coopérer avec une extrémité de l'organe élastique à activation conditionnelle correspondant.

5. Embrayage selon la revendication 4, **caractérisé en ce que** l'ergot (70) est disposé à une extrémité libre de la patte d'activation (66P).

6. Embrayage selon la revendication 4, **caractérisé en ce que** l'ergot (70) est disposé entre une extrémité de liaison de la patte d'activation (66P) avec la rondelle en tôle (66) et une extrémité libre de cette patte d'activation (66P).

7. Embrayage selon l'une quelconque des revendications précédentes, **caractérisé en ce qu'**il comporte deux organes élastiques (46A, 46B) à activation conditionnelle, la rondelle en tôle (66) comportant deux paires de pattes d'activation (66P), les pattes d'activation d'une même paire étant en prise avec une paire d'extrémités d'un organe élastique à activation conditionnelle correspondant.

8. Embrayage selon l'une quelconque des revendications précédentes, **caractérisé en ce que** les moyens de frottement à activation conditionnelle comprennent deux premières surfaces de frottement complémentaires radiales (F2, F2') portées respectivement par la première rondelle de guidage (34A) et l'organe de frottement (62).

9. Embrayage selon la revendication 8, **caractérisé en ce que** les deux premières surfaces de frottement complémentaires radiales (F2, F2') sont portées respectivement par la première rondelle de guidage (34A) et la rondelle en tôle (66).

10. Embrayage selon l'une quelconque des revendications précédentes, **caractérisé en ce que** les moyens de frottement à activation conditionnelle comprennent deux secondes surfaces de frottement complémentaires radiales (G2, G'2) portées respectivement par une rondelle élastique de compression axiale (64) et l'organe de frottement (62).

11. Embrayage selon la revendication 10, **caractérisé en ce que** les deux secondes surfaces de frottement complémentaires radiales (G2, G'2) sont portées respectivement par la rondelle élastique (64) et la rondelle en plastique (68).

12. Embrayage selon la revendication 10 ou 11, **caractérisé en ce que** l'organe de frottement (62) est intercalé axialement entre la première rondelle de guidage (34A) et la rondelle élastique (64).

13. Embrayage selon l'une quelconque des revendications précédentes, **caractérisé en ce que** l'amortisseur (A2) forme un pré-amortisseur, l'embrayage comportant de plus un amortisseur principal (A1 ) couplé en série avec le pré-amortisseur (A2).

14. Embrayage selon les revendications 10 et 13 prises ensemble, **caractérisé en ce que** l'amortisseur principal (A1) comprend :
- des première (16A) et seconde (16B) rondelles principales de guidage solidaires en rotation entre elles, et
- un voile annulaire (24) solidaire en rotation avec les rondelles de guidage (34A, 34B) du pré-amortisseur (A2), coaxial aux rondelles principales de guidage (16A, 16B) et mobile en rotation par rapport à ces rondelles principales de guidage (16A, 16B),
la rondelle élastique (64) étant intercalée axialement entre l'organe de frottement (62) et la première rondelle de guidage (16A) de l'amortisseur principal (A1).

15. Embrayage selon l'une quelconque des revendications précédentes, **caractérisé en ce que** moyens d'amortissement à activation conditionnelle sont agencés de sorte à être activés lorsque le débattement angulaire entre les rondelles de guidage et le voile est supérieur à un angle seuil prédéterminé.

16. Embrayage selon l'une quelconque des revendications précédentes, **caractérisé en ce que** moyens d'amortissement à activation conditionnelle sont agencés de sorte à être activés lorsque le débattement angulaire entre les rondelles de guidage et le voile s'effectue selon un sens de rotation prédéterminé.

17. Module pré-assemblé destiné à être monté dans un embrayage à friction selon l'une quelconque des revendications précédentes prise en combinaison avec les revendications 3 et 12, **caractérisé en ce qu'**il comporte les rondelles de guidage (34A, 34B), le voile annulaire (42) et au moins un organe élastique (46A, 46B) à activation conditionnelle du pré-amortisseur (A2), la rondelle de frottement (66) étant encliquetée sur chaque organe élastique (46A, 46B) à activation conditionnelle du pré-amortisseur (A2).

18. Module pré-assemblé selon la revendication 17, **caractérisé en ce qu'**il comporte le voile (24) de l'amortisseur principal (A1) sur lequel sont fixées les rondelles de guidage (34A, 34B) du pré-amortisseur (A2).

## Claims

1. Friction clutch, in particular for a motor vehicle, of the type comprising at least one damper (A2) comprising:
- first (34A) and second (34B) guide washers secured so as to rotate with each other,
- an annular damper plate (42) coaxial with the guide washers (34A, 34B) and able to move in rotation with respect to the guide washers (34A, 34B),
- conditional-activation damping means comprising:
o a group of elastic conditional-activation members (46A, 46B) transmitting torque between the guide washers (34A, 34B) and the annular damper plate (42) according to the angular movement between these guide washers (34A, 34B) and this damper plate (42), and
o conditional-activation friction means, arranged between the first guide washer (34A) and the damper plate (42), intended to dissipate the energy accumulated in the elastic conditional-activation members (46A, 46B), comprising a friction member (62) comprising a friction washer (66) provided with at least one lug (66P) activating this friction washer (66) angularly connected with a corresponding elastic member (46A, 46B), the activation lug (66P) being made in one piece with the friction washer (66), the activation lug (66P) being delimited by surfaces making contact with the corresponding elastic conditional-activation member (46A, 46B) and the damper plate (42), said surfaces being formed by the edge of the friction washer (66)
**characterised in that** the friction washer (66) is manufactured from a metal sheet, the friction member comprising a plastic washer (68), secured, so as to rotate with it, to the sheet-metal washer, which is interposed axially between the first guide washer and the plastic washer, the sheet-metal friction (66) and plastic (68) washers each having a friction surface (F2', G2).

2. Clutch according to claim 1, **characterised in that** the activation lug (66P) is folded axially so as to straddle or pass through the first guide washer (34A).

3. Clutch according to claim 1 or 2, **characterised in that** the surface making contact with the elastic member (46A, 46B) of the activation lug (66P) comprises snapping-on means (69) intended to cooperate with a corresponding elastic conditional-activation member (46A, 46B) in order to attach the friction member (62) to the damper (A2).

4. Clutch according to claims 1 to 3, **characterised in that** the snapping-on means (69) comprise a toe (70) made in one piece with the activation lug (66P), intended to cooperate with one end of the corresponding elastic conditional-activation member.

5. Clutch according to claim 4, **characterised in that** the toe (70) is arranged at a free end of the activation lug (66P).

6. Clutch according to claim 4, **characterised in that** the toe (70) is arranged between an end connecting the activation lug (66P) with the sheet-metal washer (66) and a free end of this activation lug (66P).

7. Clutch according to any one of the preceding claims, **characterised in that** it comprises two elastic conditional-activation members (46A, 46B), the sheet-metal washer (66) comprising two pairs of activation lugs (66P), the activation lugs in the same pair being in engagement with a pair of ends of a corresponding elastic conditional-activation member.

8. Clutch according to any one of the preceding claims, **characterised in that** the conditional-activation friction means comprise two first complementary radial friction surfaces (F2, F2') carried respectively by the first guide washer (34A) and the friction member (62).

9. Clutch according to claim 8, **characterised in that** the two first complementary radial friction surfaces (F2, F2') are carried respectively by the first guide washer (34A) and the sheet-metal washer (66).

10. Clutch according to any one of the preceding claims, **characterised in that** the conditional-activation friction means comprise two second complementary radial friction surfaces (G2, G'2) carried respectively by an elastic axial-compression washer (64) and the friction member (62).

11. Clutch according to claim 10, **characterised in that** the two second complementary radial friction surfaces (G2, G'2) are carried respectively by the elastic washer (64) and the plastic washer (68).

12. Clutch according to claim 10 or 11, **characterised in that** the friction member (62) is interposed axially between the first guide washer (34A) and the elastic washer (64).

13. Clutch according to any one of the preceding claims, **characterised in that** the damper (A2) forms a pre-damper, the clutch also comprising a main damper (A1) coupled in series with the pre-damper (A2).

14. Clutch according to claims 10 and 13 taken together, **characterised in that** the main damper (A1) comprises:
- first (16A) and second (16B) main guide washers secured to each other so as to rotate together, and
- an annular damper plate (24) secured to the guide washers (34A, 34B) of the pre-damper (A2) so as to rotate with them, coaxial with the main guide washers (16A, 16B) and able to move in rotation with respect to these main guide washers (16A, 16B),
the elastic washer (64) being interposed axially between the friction member (62) and the first guide washer (16A) of the main damper (A1).

15. Clutch according to any one of the preceding claims, **characterised in that** conditional-activation damping means are arranged so as to be activated when the angular movement between the guide washers and the damper plate is greater than a predetermined threshold angle.

16. Clutch according to any one of the preceding claims, **characterised in that** the conditional-activation damping means are arranged so as to be activated when the angular movement between the guide washers and the damper plate takes place in a predetermined direction of rotation.

17. Pre-assembled module intended to be mounted in a friction clutch according to any one of the preceding claims taken in combination with claims 3 and 12, **characterised in that** it comprises the guide washers (34A, 34B), the annular damper plate (42) and at least one elastic conditional-activation member (46A, 46B) of the pre-damper (A2), the friction washer (66) being snapped onto each elastic conditional-activation member (46a, 46B) of the pre-damper (A2).

18. Pre-assembled module according to claim 17, **characterised in that** it comprises the damper plate (24) of the main damper (A1) to which the guide washers (34A, 34B) of the pre-damper (A2) are fixed.

## Patentansprüche

1. Reibungskupplung, insbesondere für Kraftfahrzeuge, mit mindestens einem Dämpfer (A2), umfassend:
- drehfest miteinander verbundene erste (34A) und zweite (34B) Führungsscheiben,
- einen koaxial zu den Führungsscheiben (34A, 34B) und relativ zu den Führungsscheiben (34A, 34B) drehbar angeordneten ringförmigen Flansch (42),
- Dämpfungsmittel mit bedingter Aktivierung, umfassend:
• eine Gruppe von elastischen Organen mit bedingter Aktivierung (46A, 46B), die ein Drehmoment Übertragen zwischen den Führungsscheiben (34A, 34B) und dem ringförmigen Flansch (42) in Abhängigkeit des Winkelausschlags zwischen diesen Führungsscheiben (34A,34B) und diesem Flansch (42), und
• Reibungsmittel mit bedingter Aktivierung, die zwischen der ersten Führungsscheibe (34A) und dem Flansch (42) angeordnet und dazu bestimmt sind, die in den elastischen Organen mit bedingter Aktivierung (46A, 46B) gespeicherte Energie abzubauen, mit einem Reibungsorgan (62), welches eine Reibungsscheibe (66) umfasst, die mit mindestens einer Lasche (66P) zur Aktivierung dieser Reibungsscheibe (66) versehen und winklig mit einem zugehörigen elastischen Organ (46A, 46B) verbunden ist, wobei die Aktivierungslasche (66P) einstückig mit der Reibungsscheibe (66) ausgeführt ist, und wobei die Aktivierungslasche (66P) von Oberflächen zum Kontakt mit dem zugehörigen elastischen Organ (46A, 46B) mit bedingter Aktivierung und dem gebildeten Flansch (42) begrenzt ist, wobei die Oberflächen durch den Scheibenabschnitt der Reibungsscheibe (66) sind,
**dadurch gekennzeichnet, dass** die Reibungsscheibe (66) aus einem metallischen Blech hergestellt ist, wobei das Reibungsorgan eine Scheibe (68) aus Kunststoff umfasst, die drehfest mit der Scheibe aus Blech ist, welche axial zwischen der ersten Führungsscheibe und der Scheibe aus Kunststoff eingeschoben ist, wobei die Reibungsscheiben aus Blech (66) und aus Kunststoff (68) jeweils eine Reibfläche (F2',G2) aufweisen.

2. Kupplung nach Anspruch 1, **dadurch gekennzeichnet, dass** die Aktivierungslasche (66P) axial umgefaltet ist, um die erste Führungsscheibe (34A) zu überspannen oder zu durchdringen.

3. Kupplung nach Anspruch 1 oder 2, **dadurch gekennzeichnet, dass** die Oberfläche zum Kontakt mit dem elastischen Organ (46A, 46B) der Aktivierungslasche (66P) Rastmittel (69) umfasst, die dazu bestimmt sind, mit einem zugehörigen elastischen Organ mit bedingter Aktivierung (46A, 46B) zusammenzuwirken, um das Reibungsorgan (62) am Dämpfer (A2) einzuhängen.

4. Kupplung nach den Ansprüchen 1 bis 3, **dadurch gekennzeichnet, dass** die Rastmittel (69) einen einstückig mit der Aktivierungslasche (66P) ausgeführten Vorsprung (70) umfassen, welcher dazu bestimmt ist, mit einem Ende des zugehörigen elastischen Organs mit bedingter Aktivierung zusammenzuwirken.

5. Kupplung nach Anspruch 4, **dadurch gekennzeichnet, dass** der Vorsprung (70) an einem freien Ende der Aktivierungslasche (66P) angeordnet ist.

6. Kupplung nach Anspruch 4, **dadurch gekennzeichnet, dass** der Vorsprung (70) zwischen einem Ende der Aktivierungslasche (66P) zur Verbindung mit der Blechscheibe (66) und einem freien Ende dieser Aktivierungslasche (66P) angeordnet ist.

7. Kupplung nach einem der vorangehenden Ansprüche, **dadurch gekennzeichnet, dass** sie zwei elastische Organe (46A, 46B) mit bedingter Aktivierung umfasst, wobei die Scheibe aus Blech (66) zwei Paare von Aktivierungslaschen (66P) aufweist, wobei die Aktivierungslaschen eines Paares in Belegung mit einem Paar von Ende von einem zugehörigen elastischen Organ mit bedingter Aktivierung sind.

8. Kupplung nach einem der vorangehenden Ansprüche, **dadurch gekennzeichnet, dass** die Reibungsmittel mit bedingter Aktivierung zwei komplementäre radiale erste Reibungsflächen (F2, F2') umfassen, die jeweils von der ersten Führungsscheibe (34A) bzw. dem Reibungsorgan (62) getragen sind.

9. Kupplung nach Anspruch 8, **dadurch gekennzeichnet, dass** die beiden komplementären radialen ersten Reibungsflächen (F2, F2') jeweils von der ersten Führungsscheibe (34A) bzw. der Blechscheibe (66) getragen sind.

10. Kupplung nach einem der vorangehenden Ansprüche, **dadurch gekennzeichnet, dass** die Reibungsmittel mit bedingter Aktivierung zwei komplementäre radiale zweite Reibungsflächen (G2, G2') umfassen, welche jeweils von einer elastischen axialen Andruckscheibe (64) bzw. dem Reibungsorgan (62) getragen sind.

11. Kupplung nach Anspruch 10, **dadurch gekennzeichnet, dass** die beiden zweiten komplementären radialen Reibungsflächen (G2, G2') jeweils von der elastischen Scheibe (64) bzw. der Scheibe aus Kunststoff (68) getragen sind.

12. Kupplung nach Anspruch 10 oder 11, **dadurch gekennzeichnet, dass** das Reibungsorgan (62) axial zwischen der ersten Führungsscheibe (34A) und der elastischen Scheibe (64) eingefügt ist.

13. Kupplung nach einem der vorangehenden Ansprüche, **dadurch gekennzeichnet, dass** der Dämpfer (A2) einen Vordämpfer bildet, wobei die Kupplung außerdem einen Hauptdämpfer (A1) umfasst, welcher mit dem Vordämpfer (A2) in Reihe geschaltet ist.

14. Kupplung nach einer Kombination der Ansprüche 10 und 13, **dadurch gekennzeichnet, dass** der Hauptdämpfer (A1) umfasst:
- drehfest miteinander verbundene erste (16A) und zweite (16B) Hauptführungsscheiben und
- einen ringförmigen Flansch (24), welcher drehfest mit den Führungsscheiben (34A, 34B) des Vordämpfers (A2) ist, und der koaxial zu den Hauptführungsscheiben (16A, 16B) und drehbar relativ zu diesen Hauptführungsscheiben (16A, 16B) ist,
wobei die elastische Scheibe (64) axial zwischen das Reibungsorgan (62) und die erste Führungsscheibe (16A) des Hauptdämpfers (A1) eingefügt ist.

15. Kupplung nach einem der vorangehenden Ansprüche, **dadurch gekennzeichnet, dass** die Dämpfungsmittel mit bedingter Aktivierung derart angeordnet sind, dass sie aktiviert werden, wenn die Winkelauslenkung zwischen den Führungsscheiben und dem Flansch größer als ein vorbestimmter Schwellenwinkel ist.

16. Kupplung nach einem der vorangehenden Ansprüche, **dadurch gekennzeichnet, dass** die Dämpfungsmittel mit bedingter Aktivierung derart angeordnet sind, dass sie aktiviert werden, wenn die Winkelauslenkung zwischen den Führungsscheiben und dem Flansch in einer vorbestimmten Drehrichtung erfolgt.

17. Vormontiertes Modul zur Montage in einer Reibungskupplung nach einem der vorangehenden Ansprüche in Kombination mit den Ansprüchen 3 und 12, **dadurch gekennzeichnet, dass** es die Führungsscheiben (34A, 34B), den ringförmigen Flansch (42) und mindestens ein elastisches Organ mit bedingter Aktivierung (46A, 46B) des Vordämpfers (A2) umfasst, wobei die Reibungsscheibe (66) an jedem elastischen Organ mit bedingter Aktivierung (46A, 46B) des Vordämpfers (A2) eingerastet ist.

18. Vormontiertes Modul nach Anspruch 17, **dadurch gekennzeichnet, dass** es den Flansch (24) des Hauptdämpfers (A1) umfasst, an dem die Führungsscheiben (34A, 34B) des Vordämpfers (A2) befestigt sind.
